(19) Europäisches Patentamt

European Patent Office

Office européen des brevets

(11) **EP 1 630 940 A2**

(12) **EUROPEAN PATENT APPLICATION**

(43) Date of publication:
01.03.2006 Bulletin 2006/09

(51) Int Cl.:
*H02M 5/458* (2006.01)        *H02M 7/219* (2006.01)
*H02M 7/48* (2006.01)        *H02P 27/08* (2006.01)

(21) Application number: 05017641.1

(22) Date of filing: 12.08.2005

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 13.08.2004 US 918630

(71) Applicant: Rockwell Automation Technologies,
Inc.
Mayfield Heights, OH 44124 (US)

(72) Inventors:
• **Breitzmann, Robert John**
 **South Russel**
 **OH 44022 (US)**
• **Jenks, John James**
 **Rocky River**
 **OH 44116 (US)**
• **Kasunich, John Michael**
 **Mayfield Heights**
 **OH 44124 (US)**

(74) Representative: **Jung HML**
 **Schraudolphstrasse 3**
 **80799 München (DE)**

(54) **Carrier synchronisation to reduce common mode voltage in an AC drive**

(57)    A method and apparatus for use with a power conversion configuration including a pulse width modulated (PWM) converter, a PWM inverter and master and slave carrier signal generators wherein the master and slave carrier signal generators receive master and slave PWM frequency signals and generate master and slave carrier signals as a function thereof, PWM signals for controlling the converter and the inverter derived by comparing converter and inverter modulating waveforms to converter and inverter carrier signals, respectively, the method comprising the steps of identifying a phase difference between the master and slave carrier signals, using the phase difference to modify subsequent slave carrier signals to substantially conform the slave carrier signal frequency and phase to the master carrier signal frequency and phase and using the master carrier signal and the modified slave carrier signal to generate control signals for the converter and the inverter.

Fig. 1

EP 1 630 940 A2

## Description

CROSS-REFERENCE TO RELATED APPLICATIONS

Not applicable.

STATEMENT REGARDING FEDERALLY SPONSORED RESEARCH OR DEVELOPMENT

Not applicable.

BACKGROUND OF THE INVENTION

This invention relates generally to power conversion configurations and more specifically to power conversion configurations that includes at least one AC-DC converter and one DC-AC inverter where a separate oscillator crystal generates carrier signals for each of the inverters and converters and where the carrier signals are synchronized to reduce common mode voltage within the configuration.

One type of widely employed AC-AC power conversion configuration includes at least one active three phase converter sub-assembly and at least one three phase inverter sub-assembly. The converter sub-assembly is linked to three phase AC lines and receives voltages thereon from a power grid and converters those voltages to a DC voltage across positive and negative DC buses. The inverter sub-assembly is linked to the DC buses and converts that voltage to three phase AC voltages that are provided to a three phase load (e.g., a motor) to drive the load as desired.

To control the converters and inverters, in most cases the configuration will also include some type of mechanism to generate triangular carrier signals and modulating waveforms for each of the converters and inverters. The modulating waveforms are compared to the carrier signals to generate firing pulses for converter and inverter switching devices in a manner well known in the power conversion art.

An article titled "Neutral-to-Ground Voltage Minimization In A PWM-Rectifier/Inverter Configuration" by A.M. DeBroe, et. al. that was published in Power Electronics and Variable Speed Drives, pp. 564-568 in 1996 describes how common mode voltages (CMVs) occur within a convert-inverter-load configuration that can generally lead to drive and load bearing failures. Specifically, the DeBroe article recognizes that if linked inverters and converters are switched such that all of the inverter legs are linked to the positive DC bus while all of the converter legs are linked to the negative DC bus or vice versa (i.e., such that different zero voltage vectors simultaneously result in the inverter and the converter), CMVs as high as the DC bus voltage can result which have particularly adverse affects on configuration components.

The DeBroe article concludes, among other things, that to avoid the highest CMV values and thereby extend the useful life of configuration components, the switching frequencies of the converters and inverters must be the same and synchronous to each other. While the DeBroe article suggests a general solution for reducing high CMV, DeBroe does not teach or suggest a specific way in which to synchronize carrier frequencies and phase.

One seemingly simple way to synchronize inverter and converter carrier frequencies would be to provide a carrier signal from a single carrier signal generator to each configuration inverter and converter. While this solution works in theory, most inverter and converter sub-assemblies already come equipped with their own signal generators and are not designed for their internally generated carrier signals to be bypassed.

For instance, many inverter sub-assemblies come equipped with their own oscillating crystal type signal generators that receive a carrier command frequency and generate a carrier count value as a function thereof. The count value usually counts from a zero value to a maximum counter value and then back down to the zero value where the maximum count value is determined by the command frequency. In theory, the resulting up-down carrier count cycle occurs within the period defined by the commanded frequency. Here, the modulating waveforms are generated as modulating count values that approximate sinusoids or other desired waveforms. The carrier counts are directly compared to the modulating counts to generate inverter switch firing pulses.

Similarly, many commercially available active converter sub-assemblies include their own oscillating crystal based carrier signal generators that generate carrier counts as a function of command frequencies. In many converter sub-assemblies that internally generate carrier counts the carrier counts cannot be bypassed.

One other seemingly simple solution is to provide the same command frequency to each of the carrier signal generators. Unfortunately, even where the command frequencies provided to two carrier signal generators are identical, it has been observed that small differences in crystals result in drift between the resulting carrier counts. As drift accumulates, at times carrier counts that may have initially been seemingly in phase are completely out of phase and high CMVs result.

Thus, it would be advantageous to have a method and apparatus for reducing CMV even where carrier signal frequencies for inverters and converters are generated by different carrier signal generators.

BRIEF SUMMARY OF THE INVENTION

Certain aspects commensurate in scope with the originally claimed invention are set forth below. It should be understood that these aspects are presented merely to provide the reader with a brief summary of certain forms the invention might take and that these aspects are not intended to limit the scope of the invention. Indeed, the invention may encompass a variety of aspects that may not be set forth below.

It has been recognized that carrier signals generated by different carrier signal generators can be synchronized by identifying a phase shift therebetween and using the phase shift (i.e., a difference value) to adjust at least one of the commanded carrier frequencies so that the adjusted frequency is driven toward the other of the carrier frequencies.

To this end, at least some embodiments of the invention include a method for use with a power conversion configuration including at least a first pulse width modulated (PWM) converter and at least a first PWM inverter wherein a first PWM frequency signal for one of the converter and inverter and a second PWM frequency signal for the other of the converter and the inverter are provided and wherein PWM signals for controlling the first converter and first inverter are derived by comparing converter and inverter modulating waveforms to converter and inverter carrier signals, respectively. At least some inventive methods include the steps of generating a first carrier signal using a first signal generator and as a function of the first PWM frequency signal, generating a second carrier signal using a second signal generator and as a function of the second PWM frequency signal, identifying at least one difference value indicating a difference between the first carrier signal and the second carrier signal, using the at least one difference value to alter at least one of subsequent first carrier signals and subsequent second carrier signals thereby generating a modified carrier signal set including a subset of the first carrier signals, the second carrier signals and the altered carrier signals and comparing the modified carrier signal set to the modulating waveforms to generate converter and inverter PWM signals.

In at least some cases each of the first and second carrier signals has a carrier signal frequency and the step of identifying at least one difference value includes identifying at least one difference between the first and second carrier signals that is at least associated with a difference between the first and second carrier signal frequencies. In some cases the step of using includes using the at least one difference value to drive the second carrier signal frequency toward the first carrier signal frequency. Here, the step of identifying at least one difference may include identifying a shift value indicative of the phase shift between the first and second carrier signals.

The step of using may further include using the shift value to drive at least one of the first carrier signal phase and the second carrier signal phase toward the other of the first carrier signal phase and the second carrier signal phase. Here, the first PWM frequency signal, the first carrier signal, the second PWM frequency signal and the second carrier signal may be a master PWM frequency signal, a master carrier signal, a slave PWM frequency signal and a slave carrier signal, respectively, and the step of using the shift value may include using the shift value to drive the slave carrier signal phase toward the master carrier signal phase. Further, the step of using the shift value to drive the slave carrier signal phase toward the master carrier signal phase may include altering the slave PWM frequency signal until the master and slave carrier signal phases are at least substantially similar.

The step of altering the slave PWM frequency signal may include mathematically combining the shift value and the slave PWM frequency signal to generate an altered slave PWM frequency signal and the step of generating a slave carrier signal as a function of the slave PWM carrier signal may include generating the slave carrier signal as a function of the altered slave PWM frequency signal. Here, the step of mathematically combining may include subtracting at least a derivative of the shift value from the slave PWM frequency signal.

In at least some embodiments each of the first and second signal generators generates a counter value that counts between a zero value and a maximum value to generate the corresponding carrier signal and the step of identifying at least one difference value may include identifying a phase difference between one of (a) the zero values generated by the first and second signal generators and (b) the maximum counter values generated by the first and second signal generators.

In some embodiments the first PWM frequency signal, the first carrier signal, the second PWM frequency signal and the second carrier signal are a master PWM frequency signal, a master carrier signal, a slave PWM frequency signal and a slave carrier signal, respectively. Here, the step of using the at least one difference value may include using the difference value to alter subsequent slave carrier signals thereby generating a modified carrier signal set including the master carrier signals and the altered slave carrier signals. Here, the method may also be for use with N additional converters and inverters, the method further including the steps of receiving N additional slave PWM frequency signals for the N additional inverters and converters, generating N additional slave carrier signals using N additional signal generators and as a function of the N slave PWM frequency signals, for each of the N additional slave carrier signals, identifying at least one difference value indicating a difference between the master carrier signal and the additional slave carrier signal, using the at least one difference value to alter subsequent additional slave carrier signals thereby generating a modified carrier signal set including a subset of the master carrier signals and the altered slave carrier signals and comparing the modified carrier signal set to the modulating waveforms to generate controlling signals for each of the inverters and converters.

At least some embodiments include a method for use with a power conversion configuration including a pulse width modulated (PWM) converter and a PWM inverter wherein a master PWM frequency signal for one of the converter and inverter and a slave PWM frequency signal for the other of the converter and the inverter are provided and wherein PWM signals for controlling the first converter and first inverter are derived by comparing converter and inverter modulating waveforms to converter and inverter carrier signals, respectively, the method for substantially synchronizing inverter and converter carrier signals and comprising the steps of generating a master carrier count as a function of the master PWM frequency signal wherein the master carrier count counts up from a minimum master counter value to a maximum master counter value and down from the maximum master counter value to the minimum master counter value, generating a slave carrier count as a function of the slave PWM frequency signal wherein the slave carrier count counts up from a minimum slave counter value to a maximum slave counter value and down from the maximum slave counter value to the minimum slave counter value, identifying a phase difference between the master and slave counter values, using the phase difference to modify subsequent slave carrier counts and using the master carrier count and the modified slave carrier count to generate converter and inverter PWM control signals.

Some embodiments include a method for use with a power conversion configuration including a pulse width modulated (PWM) converter, a PWM inverter and master and slave carrier signal generators wherein the master and slave carrier signal generators receive master and slave PWM frequency signals and generate master and slave carrier signals as a function thereof, PWM signals for controlling the converter and the inverter derived by comparing converter and inverter modulating waveforms to converter and inverter carrier signals, respectively, the method comprising the steps of identifying a phase difference between the master and slave carrier signals, using the phase difference to modify subsequent slave carrier signals to substantially conform the slave carrier signal frequency and phase to the master carrier signal frequency and phase and using the master carrier signal and the modified slave carrier signal to generate control signals for the converter and the inverter.

Some embodiments include an apparatus for use with a power conversion configuration including at least a first pulse width modulated (PWM) converter and at least a first PWM inverter wherein a first PWM frequency signal for one of the converter and inverter and a second PWM frequency signal for the other of the converter and the inverter are provided and wherein PWM signals for controlling the first converter and first inverter are derived by comparing converter and inverter modulating waveforms to converter and inverter carrier signals, respectively, the apparatus for substantially synchronizing inverter and converter carrier signals and comprising a first signal generator generating a first carrier signal as a function of the first PWM frequency signal, a second signal generator generating a second carrier signal as a function of the second PWM frequency signal, a comparator for identifying at least one difference value indicating a difference between the first carrier signal and the second carrier signal and a modifier using the at least one difference value to alter at least one of subsequent first carrier signals and subsequent second carrier signals thereby generating a modified carrier signal set including a subset of the first carrier signals, the second carrier signals and the altered carrier signals for comparison to the modulating waveforms to generate converter and inverter PWM signals.

Still other embodiments include an apparatus for use with a power conversion configuration including a pulse width modulated (PWM) converter, a PWM inverter and master and slave carrier signal generators wherein the master and slave carrier signal generators receive master and slave PWM frequency signals and generate master and slave carrier signals as a function thereof, PWM signals for controlling the converter and the inverter derived by comparing converter and inverter modulating waveforms to converter and inverter carrier signals, respectively, the apparatus comprising a comparator identifying a phase difference between the master and slave carrier signals and a modifier using the phase difference to modify subsequent slave carrier signals to substantially conform the slave carrier signal frequency and phase to the master carrier signal frequency and phase wherein the master carrier signal and the modified slave carrier signal are used to generate control signals for the converter and the inverter.

The invention also includes a method for use with a power conversion configuration including at least a first instance of one of a pulse width modulated (PWM) converter and a PWM inverter and at least a second instance of one of a PWM converter and a PWM inverter wherein a first PWM frequency signal the first instance and a second PWM frequency signal for the second instance are provided and wherein PWM signals for controlling the first and second instances are derived by comparing first and second modulating waveforms to first and second carrier signals, respectively, the method for substantially synchronizing carrier signals used at least in part to drive the first and second instances and comprising the steps of generating a first carrier signal using a first signal generator and as a function of the first PWM frequency signal, generating a second carrier signal using a second signal generator and as a function of the second PWM frequency signal, identifying at least one difference value indicating a difference between the first carrier signal and the second carrier signal, using the at least one difference value to alter at least one of subsequent first carrier signals and subsequent second carrier signals thereby generating a modified carrier signal set including a subset of the first carrier signals, the second carrier signals and the altered carrier signals and comparing the modified carrier signal set to the modulating waveforms to generate PWM signals to drive the first and second instances, respectively. Here, each of the first and second instances may be PWM converters or may be PWM inverters.

These and other objects, advantages and aspects of the invention will become apparent from the following description. In the description, reference is made to the accompanying drawings which form a part hereof, and in which there is shown a preferred embodiment of the invention. Such embodiment does not necessarily represent the full scope of the invention and reference is made therefore, to the claims herein for interpreting the scope of the invention.

BRIEF DESCRIPTION OF THE SEVERAL VIEWS OF THE DRAWINGS

The invention will hereafter be described with reference to the accompanying drawings, wherein like reference numerals denote like elements, and:

Fig. 1 is a schematic diagram of an exemplary power conversion assembly according to at least one embodiment of the present invention;

Fig. 2 is a schematic diagram of one embodiment of a comparator that may be used within the configuration illustrated in Fig. 1;

Fig. 3 is a flow chart illustrating a method that is consistent with at least some aspects of the present invention;

Fig. 4 is a schematic diagram similar to that of Fig. 1, albeit illustrating an exemplary power conversion assembly wherein carrier signals used to, at least in part, drive two separate converter assemblies are synchronized; and

Fig. 5 is similar to the diagram of Fig. 1, albeit illustrating a configuration wherein carrier signals used to, at least in part, drive two separate inverters are synchronized.

DETAILED DESCRIPTION OF THE INVENTION

One or more specific embodiments of the present invention will be described below. It should be appreciated that in the development of any such actual implementation, as in any engineering or design project, numerous implementation-specific decisions must be made to achieve the developers' specific goals, such as compliance with system-related and business related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

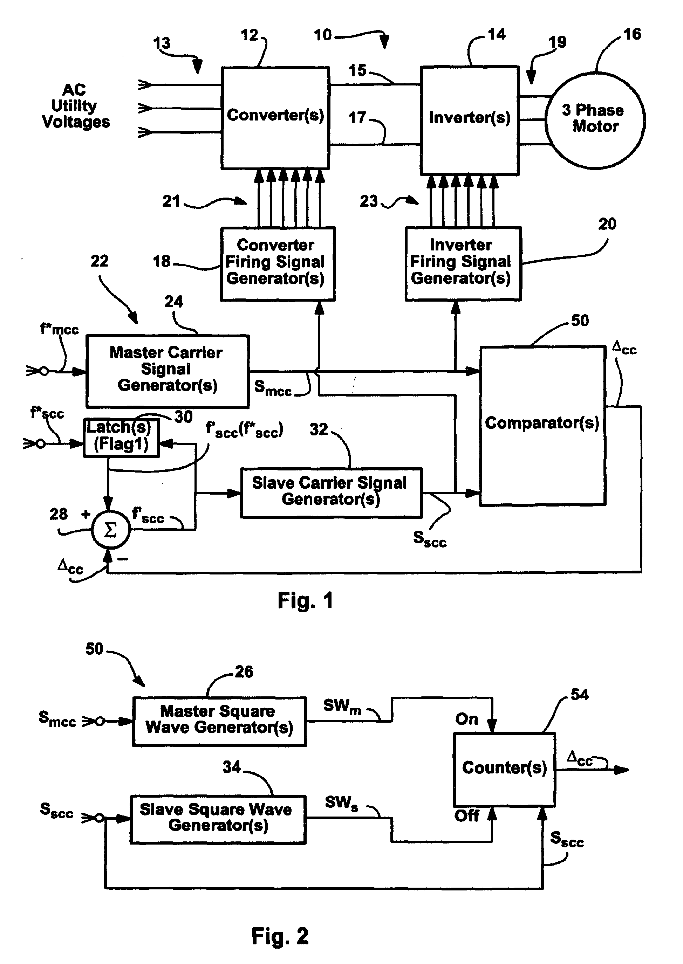

Referring now to the drawings wherein like reference numerals correspond to similar elements throughout the several views and, more specifically, referring to Fig. 1, the present invention will be described in the context of an exemplary power conversion configuration 10 including a converter 12, an inverter 14, a three-phase motor 16, a converter firing signal generator 18, an inverter firing signal generator 20, a master carrier signal generator 24, a slave carrier signal generator 32, a summer 28, a latch 30 and a comparator 50.

As well known in the power conversion art, three-phase AC voltage is provided by a utility via three power supply lines collectively identified by numeral 13 in Fig. 1. The three supply lines are linked to an active three-phase converter bridge 12 which, as the label implies, converts the three-phase AC power to a DC voltage across positive and negative DC buses 15 and 17, respectively. The DC buses 15 and 17 are in turn linked to a three-phase inverter bridge 14 which is controlled to generate three-phase AC power on three supply lines collectively identified by numeral 19. The three supply lines 19 are linked to separate phases of a load, in the present example, motor 16.

To control converter bridge switches, converter firing signal generator 18 is linked to converter 12 via six control lines collectively identified by numeral 21. As well known in the art, signal generator 18 compares modulating waveforms to a triangular carrier waveform to generate the control signals for the converter bridge switches. Similarly, to control the inverter bridge switches, inverter firing signal generator 20 is linked to inverter 14 via six control lines collectively identified by numeral 23. Generator 20 generates control signals by comparing modulating waveforms to a triangular carrier signal.

Hereinafter, while not illustrated in great detail, it will be assumed that each of the converter and inverter modulating waveforms is generated as a modulating count value that cycles in a manner that defines the corresponding waveform. Similarly, the carrier signals are expressed as carrier count values that cycle generally linearly from a minimum count value to a maximum count value and then back down to the minimum count value to define a saw-tooth type carrier signal. Generators 18 and 20 receives slave and master carrier count values, respectively, compare their respective modulating count values to their respective carrier count values and generate the controlling firing signals accordingly. Hereinafter, the master and slave carrier count signals are labeled $S_{mcc}$ and $S_{scc}$, respectively.

To generate carrier count signal $S_{mcc}$, master carrier signal generator 24, in at least some embodiments, includes a master oscillating crystal that generates pulses at a uniform high crystal frequency (e.g., several thousand times a typical carrier frequency) as well as an up/down counter. Generator 24 receives a master (i.e., first) PWM frequency signal $f_{mcc}^{*}$ that indicates a desired or commanded carrier signal frequency. Where signal $f_{mcc}^{*}$ is an actual frequency signal, generator 24 converts signal $f_{mcc}^{*}$ into carrier count maximum and minimum values as a function of the crystal frequency that should result in a carrier frequency equal to the commanded frequency of signal $f_{mcc}^{*}$. Hereinafter it will be assumed that the minimum master counter value is zero so that frequency $f_{mcc}^{*}$ can be represented as a maximum master counter value that will result in a carrier frequency that should be equal to the commanded frequency. Moreover, unless indicated otherwise, it will be assumed hereafter that master signal $f_{mcc}^*$ is expressed as the maximum carrier count value.

Similarly, to generate slave carrier count signal $S_{scc}$, a slave PWM frequency command signal $f_{scc}^*$ is received which will be assumed hereafter to be a maximum slave count value that should result in a desired slave carrier signal frequency. In the case of slave carrier signal generation, however, the maximum slave count value is altered to synchronize the master and slave carrier signals as described hereafter.

To alter the slave carrier signal and thereby synchronize the slave carrier signal to the master carrier signal, command slave PWM frequency signal $f_{scc}^*$ is provided to latch 30 which initially passes the original signal $f_{scc}^*$ to summer 28. Summer 28 subtracts a difference value $\Delta_{cc}$ from the original signal $f_{scc}^*$ to generate an altered or modified slave carrier frequency signal $f_{scc}'$ which is provided to each of the slave carrier signal generator 32 and latch 30. Once latch 30 receives signal $f_{scc}'$, latch 30 switches to pass signal $f_{scc}'$ to summer 28 which continues to combine signal $f_{scc}'$ and difference value $\Delta_{cc}$ to continuously update signal $f_{scc}'$. Consistent with the description above, signal $f_{scc}'$ and difference value $\Delta_{cc}$ are count values in at least some embodiments so that value $\Delta_{cc}$ can be directly subtracted from either signal $f_{scc}'$ or $f_{scc}'$.

To generate difference value $\Delta_{cc}$, referring still to Fig. 1, master carrier count signal $S_{mcc}$ and slave carrier count signal $S_{scc}$ are provided to comparator 50 which generates count difference value $\Delta_{cc}$. Referring also to Fig. 2, an exemplary comparator 50 is illustrated which includes a master square wave generator 26, a slave square wave generator 34 and a counter 54. Master square wave generator 26 receives the master carrier count signal $S_{mcc}$ and generates a master square wave $SW_m$ that is high or ON while the master carrier count $S_{mcc}$ is counting up and is low or OFF while the master carrier count $S_{mcc}$ is counting down. Similarly, slave square wave generator 34 receives the slave carrier count signal $S_{scc}$ and generates a slave square wave $SW_s$ which is high or ON while the slave carrier count $S_{scc}$ is counting up and is low or OFF while slave carrier count $S_{scc}$ is counting down.

The master square wave $SW_m$ and slave square wave $SW_s$ are provided to counter 54 as is the slave carrier count signal $S_{scc}$. Counter 54 initially has a zero value and is turned on whenever master square wave $SW_m$ goes ON or high and is turned off whenever slave square wave $SW_s$ goes ON or high. During the time that counter 54 is on between the rising edges of master square wave $SW_m$ and slave square wave $SW_s$, counter 54 increments difference value $\Delta_{cc}$ each time slave carrier count $S_{scc}$ is incremented. When master square wave $SW_m$ goes off or low, difference value $\Delta_{cc}$ is reset to a zero value. Thus, difference value $\Delta_{cc}$ counts the number of times slave carrier signal $S_{scc}$ is incremented between the rising edges of square waves $SW_m$ and $SW_s$ thereby indicating a phase difference between the rising edges.

Referring to Figs. 1 and 2, when difference value $\Delta_{cc}$ is subtracted from the current slave frequency, the adjusted frequency count or signal $f_{scc}'$ is driven toward a value which synchronizes the frequency and phase of the master and slave carrier signals.

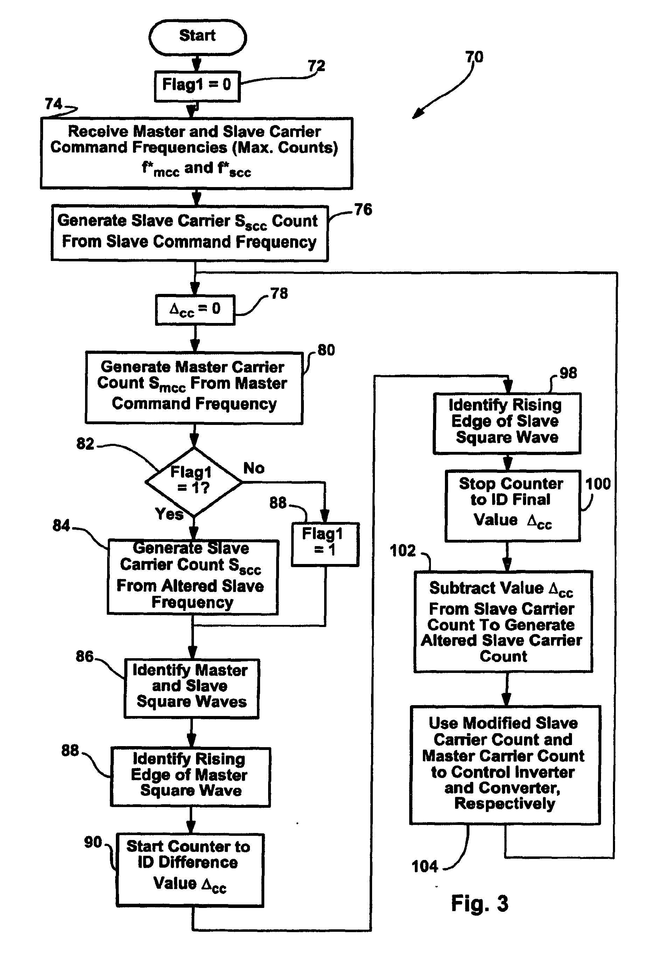

Referring now to Fig. 3, an exemplary method 70 consistent with at least some contemplated embodiments of the present invention is illustrated. At block 72 a flag FLAG1 is set equal to zero where FLAG1 is used to distinguish a first pass through the method 70 from subsequent passes. At block 74, referring also to Fig. 1, the master and slave carrier signal generators 24 and 32 receive the master and slave carrier command frequencies or count values $f_{mcc}^*$ and $f_{scc}^*$, respectively. Here, initially, salve carrier count $f_{scc}^*$ is passed by latch 30 and difference value $\Delta_{cc}$ is initially zero so that command count $f_{scc}^*$ is passed through summer 28 to generator 32. At block 76, the slave carrier signal or count $S_{scc}$ is generated which is consistent with the slave command frequency $f_{scc}^*$ (i.e., count $S_{scc}$ is incremented and decremented between zero and the maximum slave carrier count value expressed as count $f_{scc}^*$ $f_{scc}^*$). At block 78, difference value $\Delta_{cc}$ is set equal to zero. At block 80, generator 24 generates the master carrier signal or count $S_{mcc}$ using the master command frequency $f_{mcc}^*$.

At block 82, the status of FLAG1 is identified. During the first pass through method 70 where FLAG1 is equal to zero (see again block 72), control passes to block 88 where FLAG1 is set equal to one indicating that the next pass through method 70 will be subsequent to the first pass. After block 88 control passes to block 86. Referring again to decision block 82, where FLAG1 is equal to one and hence the current pass through method 70 is subsequent to the first pass, control passes to block 84 where the slave carrier signal or count $S_{scc}$ is determined as a function of the altered slave frequency $f'_{scc}$. Thus, decision block 82 controls latch 30 so that the frequency provided to summer 28 during the first pass through method 70 is the initial slave command frequency $f'_{scc}$ and thereafter is the altered slave frequency $f_{alt}$. After block 84, control passes to block 86.

Referring still to Figs. 1 and 3 and also to Fig. 2, at block 86, square wave generator 26 generates master square wave $SW_m$. Similarly, slave square wave generator 34 identifies slave square wave $SW_s$ at block 86. At block 88, the rising edge of master square wave $SW_m$ is identified and at block 90, when the rising edge of master square wave $SW_m$ is identified, counter 54 is turned on so that difference value $\Delta_{cc}$ is incremented each time the carrier signal or count $S_{scc}$ is incremented.

Continuing, at block 98, the rising edge of slave square wave $SW_s$ is identified and at block 100, when the rising edge of slave square wave $SW_s$ occurs, counter 54 is turned off or disabled which results in a final difference value $\Delta_{cc}$. At block 102, difference value $\Delta_{cc}$ is subtracted by summer 28 from either the initial slave frequency count $f^*_{scc}$ or from the subsequent slave frequency count $f'_{scc}$ thereby updating the altered slave carrier frequency count $f'_{scc}$. At block 104, the altered slave carrier frequency $f'_{scc}$ is used to drive slave carrier signal generator 32 resulting in an updated slave carrier signal or count $S_{scc}$ and the master and slave carrier signals $S_{mcc}$ and $S_{scc}$ are fed to control converters 12 and 14, respectively.

While the invention may be susceptible to various modifications and alternative forms, specific embodiments have been shown by way of example in the drawings and have been described in detail herein. However, it should be understood that the invention is not intended to be limited to the particular forms disclosed above. For example, while the invention is described above as one wherein counter 54 is turned ON and OFF as a function of the rising edges of the master and slave square waves $SW_m$ and $SW_s$, it should be appreciated that counter 54 ON and OFF activity could be latched to falling edges of the square waves.

In addition, in at least some cases it is contemplated that counter 54 ON and OFF activity could be latched to other similar relative instances of each of the first and second carrier signal cycles. For example, while more difficult to identify, counter 54 could be turned ON when the master carrier count $S_{mcc}$ reaches half of the maximum current master counter value and could be turned OFF when the slave carrier count $S_{scc}$ reaches half the current maximum slave carrier count value to achieve a result similar to that describe above.

Moreover, while the square wave generators 26 and 34 described above generate square waves that are high or ON while associated carrier counts are counting up and are lower or OFF while associated carrier counts are counting down, it is contemplated that the square waves may instead be low or OFF when an associated carrier count is counting up and high or ON when the carrier count is counting down.

Moreover, while the master and slave carrier counts are described above as being used to drive the inverter 14 and converter 12 generators respectively, the master count could be provided to the converter generator instead in at least some contemplated embodiments.

In addition, while the invention is described above in the context of a system wherein carrier signals between at least one converter and at least one inverter are synchronized, it should be appreciated that the invention also can be applied to a system wherein CMV is minimized on the pre-DC bus side of the configuration or on the post-DC bus side of the configuration by synchronizing either two or more carrier signals used to drive converter generators or synchronizing either two or more carrier signals used to drive inverter generators.

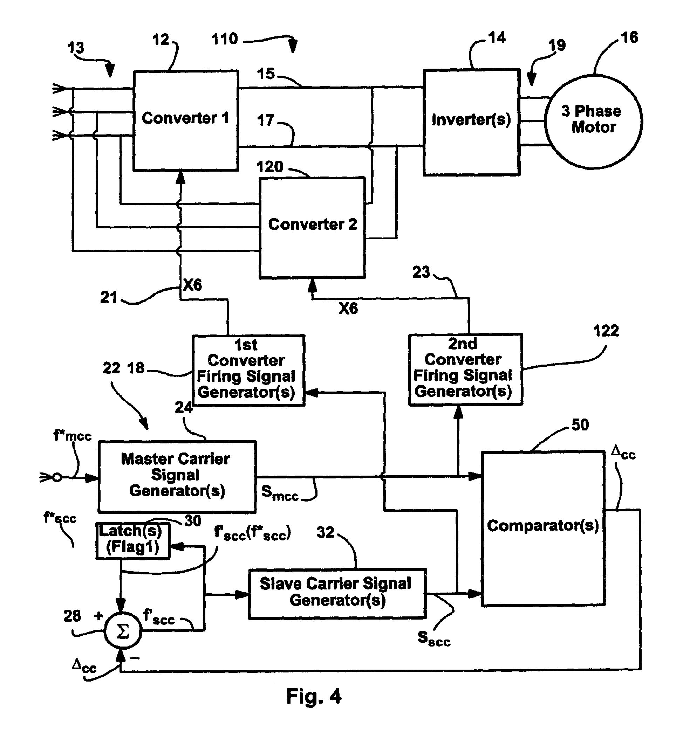

To this end, referring to Fig. 4, an exemplary configuration 110 similar to the configuration of Fig. 1 is illustrated wherein elements labeled with the same numbers in Figs. 1 and 4 generally operate in the fashion described above with minor exceptions. First, in Fig. 4, the configuration 110 includes two converters, a first converter 12 and a second converter 120. The first converter 12 is linked between three-phase AC supply lines 13 and positive and negative DC buses 15 and 17, respectively, as described above. Second converter 120, like the first converter 12, is also linked between three-phase AC supply lines 13 and positive and negative DC buses 15 and 17, respectively. Second, the master carrier count signal $S_{mcc}$ is provided to a second converter firing signal generator 122 instead of to an inverter firing signal generator 20 as illustrated in Fig. 1. Here, the output of generator 122 is provided to second converter 120 to drive that converter. In Fig. 4 it is contemplated that, although not illustrated, a separate controlling circuit is provided for inverter 14 where, in at least some cases, the carrier signal used in part to drive inverter 14 would not be synchronized with the master and slave carrier signals generated by generators 24 and 32.

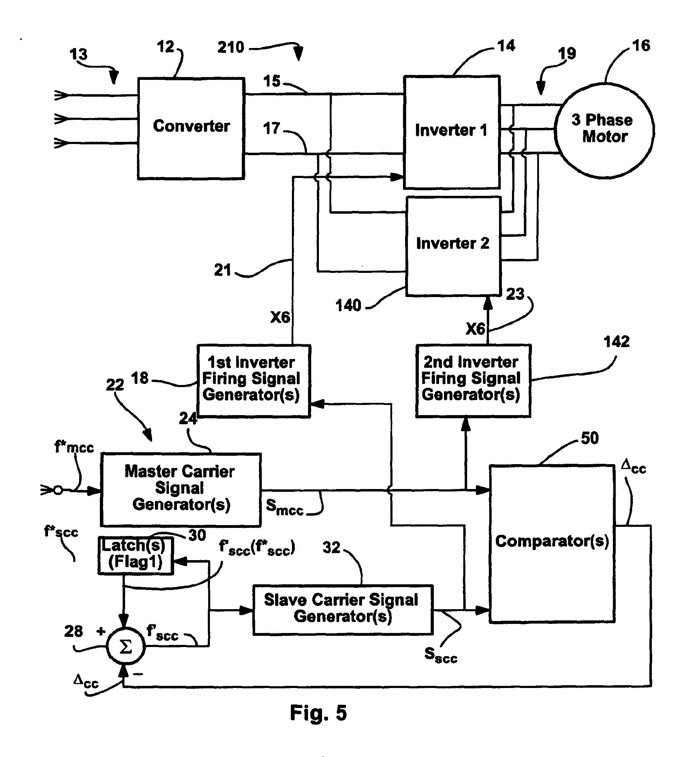

Referring now to Fig. 5, a configuration 210 similar to configuration 10 of Fig. 1 is illustrated wherein synchronized master and slave carrier signals are provided by generators 24 and 32 to two different firing signal generators that in turn feed first and second inverters 14 and 140. Here, the second inverter 140, like first inverter 14, is linked between positive and negative DC buses 15 and 17 and three-phase lines 19 of a three-phase load. In the Fig. 5 case, it is contemplated that a separate control circuit would be provided for converter 12 which uses, in at least some embodiments, a carrier signal that is not synchronized with the master and slave carrier signals used to drive the first and second inverter firing signal generators 18 and 142.

In addition, while the embodiment described above is one wherein the difference value $\Delta_{cc}$ is an actual count value, it is contemplated that the difference value $\Delta_{cc}$ may take a different form such as a time value indicating the duration of the period between rising edges of the master and slave carrier signals wherein the time value which is indicative of phase shift or difference could be used to alter the slave carrier frequency. Similarly, the slave frequency adjustment could be performed prior to conversion of the frequency values to counts. Here, the time phase shift or difference value count $\Delta_{cc}$ could be converted to a frequency difference so that the adjustment is possible.

Furthermore, while the invention is described above in the context of a configuration 10 (see again Fig. 1) including a single converter 12 and a single inverter 14, it should be appreciated that many aspects of the present invention are also applicable to more complex configurations that include more than one converter and/or more than one inverter where all of the slave carrier frequencies and phases are driven toward one master carrier frequency and phase. Thus, where a system includes N additional converters and inverters, it is contemplated that N additional slave carrier signal generators, N additional summers and N additional square wave generators and counters would be provided. In Figs. 1 and 2 the possibility of supporting multiple converter and/or inverter topologies is represented by the plural "(s)" designation of various configuration components.

In addition, while the invention is described as one wherein there is one master frequency and one or more slave frequencies and associated components, it is contemplated that in at least some cases there may not be a master frequency and instead, system carrier frequencies may all be driven toward a common middle or average frequency value. Thus, for instance, where a configuration includes one converter and one inverter, an average of current converter and inverter carrier frequencies may be identified and the current converter and inverter carrier frequencies may both be driven toward the average carrier frequency or, for that matter, toward some other intermediate frequency.

In the claims that follow, the phrase "at least a derivative of" is used to indicate a relationship wherein one signal or value is associated with another signal or value and somehow reflects the other signal or value in a broad sense as opposed to meaning an actual mathematical derivative.

Thus, the invention is to cover all modifications, equivalents, and alternatives falling within the spirit and scope of the invention as defined by the following appended claims.

To apprise the public of the scope of this invention, the following claims are made:

In summary the invention is directed to a method and apparatus for use with a power conversion configuration including a pulse width modulated (PWM) converter, a PWM inverter and master and slave carrier signal generators wherein the master and slave carrier signal generators receive master and slave PWM frequency signals and generate master and slave carrier signals as a function thereof, PWM signals for controlling the converter and the inverter derived by comparing converter and inverter modulating waveforms to converter and inverter carrier signals, respectively, the method comprising the steps of identifying a phase difference between the master and slave carrier signals, using the phase difference to modify subsequent slave carrier signals to substantially conform the slave carrier signal frequency and phase to the master carrier signal frequency and phase and using the master carrier signal and the modified slave carrier signal to generate control signals for the converter and the inverter.

## Claims

1. A method for use with a power conversion configuration including at least a first pulse width modulated (PWM) converter and at least a first PWM inverter wherein a first PWM frequency signal for one of the converter and inverter and a second PWM frequency signal for the other of the converter and the inverter are provided and wherein PWM signals for controlling the first converter and first inverter are derived by comparing converter and inverter modulating waveforms to converter and inverter carrier signals, respectively, the method for substantially synchronizing inverter and converter carrier signals and comprising the steps of:

   generating a first carrier signal using a first signal generator and as a function of the first PWM frequency signal;
   generating a second carrier signal using a second signal generator and as a function of the second PWM frequency signal;
   identifying at least one difference value indicating a difference between the first carrier signal and the second carrier signal;
   using the at least one difference value to alter at least one of subsequent first carrier signals and subsequent second carrier signals thereby generating a modified carrier signal set including a subset of the first carrier signals, the second carrier signals and the altered carrier signals; and
   comparing the modified carrier signal set to the modulating waveforms to generate converter and inverter PWM signals.

**2.** The method of claim 1 wherein each of the first and second carrier signals has a carrier signal frequency and wherein the step of identifying at least one difference value includes identifying at least one difference between the first and second carrier signals that is at least associated with a difference between the first and second carrier signal frequencies.

**3.** The method of claim 2 wherein the step of using includes using the at least one difference value to drive the second carrier signal frequency toward the first carrier signal frequency.

**4.** The method of claim 3 wherein the step of identifying at least one difference includes identifying a shift value indicative of the phase shift between the first and second carrier signals.

**5.** The method of claim 4 wherein the step of using further includes using the shift value to drive at least one of the first carrier signal phase and the second carrier signal phase toward the other of the first carrier signal phase and the second carrier signal phase.

**6.** The method of claim 5 wherein the first PWM frequency signal, the first carrier signal, the second PWM frequency signal and the second carrier signal are a master PWM frequency signal, a master carrier signal, a slave PWM frequency signal and a slave carrier signal, respectively, and wherein the step of using the shift value includes using the shift value to drive the slave carrier signal phase toward the master carrier signal phase.

**7.** The method of claim 6 wherein the step of using the shift value to drive the slave carrier signal phase toward the master carrier signal phase includes altering the slave PWM frequency signal until the master and slave carrier signal phases are at least substantially similar.

**8.** The method of claim 7 wherein the step of altering the slave PWM frequency signal includes mathematically combining the shift value and the slave PWM frequency signal to generate an altered slave PWM frequency signal and wherein the step of generating a slave carrier signal as a function of the slave PWM carrier signal includes generating the slave carrier signal as a function of the altered slave PWM frequency signal.

**9.** The method of claim 8 wherein the step of mathematically combining includes subtracting at least a derivative of the shift value from the slave PWM frequency signal.

**10.** The method of one of claims 1 to 9 wherein the step of identifying at least a difference value includes identifying a phase difference between similar relative instances of each of the first and second carrier signal cycles.

**11.** The method of one of claims 1 to 10 wherein each of the first and second signal generators generates a counter value that counts between a zero value and a maximum value to generate the corresponding carrier signal and wherein the step of identifying at least one difference value includes identifying a phase difference between one of (a) the zero values generated by the first and second signal generators and (b) the maximum counter values generated by the first and second signal generators.

**12.** The method of claim 11 wherein the step of identifying at least a difference value further includes generating a square wave for each one of the first and second carrier signals and comparing one of the rising edges of the carrier signals and the falling edges of the carrier signals to identify a phase difference between the first and second carrier signals.

**13.** The method of one of claims 1 to 12 wherein the first PWM frequency signal, the first carrier signal, the second PWM frequency signal and the second carrier signal are a master PWM frequency signal, a master carrier signal, a slave PWM frequency signal and a slave carrier signal, respectively, the step of using the at least one difference value including using the difference value to alter subsequent slave carrier signals thereby generating a modified carrier signal set including the master carrier signals and the altered slave carrier signals, the method also for use with N additional converters and inverters, the method further including the steps of receiving N additional slave PWM frequency signals for the N additional inverters and converters, generating N additional slave carrier signals using N additional signal generators and as a function of the N slave PWM frequency signals, for each of the N additional slave carrier signals, identifying at least one difference value indicating a difference between the master carrier signal and the additional slave carrier signal, using the at least one difference value to alter subsequent additional slave carrier signals thereby generating a modified carrier signal set including a subset of the master carrier signals and the altered slave carrier signals and comparing the modified carrier signal set to the modulating waveforms to generate controlling signals for each of the inverters and converters.

**14.** A method for use with a power conversion configuration including a pulse width modulated (PWM) converter and a PWM inverter wherein a master PWM frequency signal for one of the converter and inverter and a slave PWM frequency signal for the other of the converter and the inverter are provided and wherein PWM signals for controlling the first converter and first inverter are derived by comparing converter and inverter modulating waveforms to converter and inverter carrier signals, respectively, the method for substantially synchronizing inverter and converter carrier signals and comprising the steps of:

generating a master carrier count as a function of the master PWM frequency signal wherein the master carrier count counts up from a minimum master counter value to a maximum master counter value and down from the maximum master counter value to the minimum master counter value;

generating a slave carrier count as a function of the slave PWM frequency signal wherein the slave carrier count counts up from a minimum slave counter value to a maximum slave counter value and down from the maximum slave counter value to the minimum slave counter value;

identifying a phase difference between the master and slave counter values;

using the phase difference to modify subsequent slave carrier counts; and

using the master carrier count and the modified slave carrier count to generate converter and inverter PWM control signals.

15. The method of claim 14 wherein the step of using the phase difference to modify subsequent slave carrier counts includes modifying the slave PWM frequency signal as a function of the phase difference.

16. The method of claim 14 wherein the step of using the phase difference to modify subsequent slave carrier counts includes altering the maximum slave counter value.

17. The method of claim 14 wherein the minimum counter values are zero.

18. A method for use with a power conversion configuration including a pulse width modulated (PWM) converter, a PWM inverter and master and slave carrier signal generators wherein the master and slave carrier signal generators receive master and slave PWM frequency signals and generate master and slave carrier signals as a function thereof, PWM signals for controlling the converter and the inverter derived by comparing converter and inverter modulating waveforms to converter and inverter carrier signals, respectively, the method comprising the steps of:

identifying a phase difference between the master and slave carrier signals;

using the phase difference to modify subsequent slave carrier signals to substantially conform the slave carrier signal frequency and phase to the master carrier signal frequency and phase; and

using the master carrier signal and the modified slave carrier signal to generate control signals for the converter and the inverter.

19. An apparatus for use with a power conversion configuration including at least a first pulse width modulated (PWM) converter and at least a first PWM inverter wherein a first PWM frequency signal for one of the converter and inverter and a second PWM frequency signal for the other of the converter and the inverter are provided and wherein PWM signals for controlling the first converter and first inverter are derived by comparing converter and inverter modulating waveforms to converter and inverter carrier signals, respectively, the apparatus for substantially synchronizing inverter and converter carrier signals and comprising:

a first signal generator generating a first carrier signal as a function of the first PWM frequency signal;

a second signal generator generating a second carrier signal as a function of the second PWM frequency signal;

a comparator for identifying at least one difference value indicating a difference between the first carrier signal and the second carrier signal;

a modifier using the at least one difference value to alter at least one of subsequent first carrier signals and subsequent second carrier signals thereby generating a modified carrier signal set including a subset of the first carrier signals, the second carrier signals and the altered carrier signals for comparison to the modulating waveforms to generate converter and inverter PWM signals.

20. The apparatus of claim 19 the comparator identifies a shift value indicative of the phase shift between the first and second carrier signals.

21. The apparatus of claim 20 wherein the first PWM frequency signal, the first carrier signal, the second PWM frequency signal and the second carrier signal are a master PWM frequency signal, a master carrier signal, a slave PWM frequency signal and a slave carrier signal, respectively, and wherein the modifier uses the shift value to drive the slave carrier signal phase toward the master carrier signal phase.

22. The apparatus of claim 19 wherein each of the first and second signal generators generates a counter value that counts between a zero value and a maximum value to generate the corresponding carrier signal and wherein the comparator identifies at least one difference value by identifying a phase difference between one of (a) the zero values generated by the first and second signal generators and (b) the maximum counter values generated by the first and second signal generators.

23. The apparatus of claim 22 wherein the comparator identifies at least a difference value by generating a square wave for each one of the first and second carrier signals and comparing one of the rising edges of the carrier signals and the falling edges of the carrier signals to identify a phase difference between the first and second carrier signals.

24. An apparatus for use with a power conversion configuration including a pulse width modulated (PWM) converter, a PWM inverter and master and slave carrier signal generators wherein the master and slave carrier signal generators receive master and slave PWM frequency signals and generate master and slave carrier signals as a function thereof, PWM signals for controlling the converter and the inverter derived by comparing converter and inverter modulating waveforms to converter and inverter carrier signals, respectively, the apparatus comprising:

a comparator identifying a phase difference between the master and slave carrier signals;
a modifier using the phase difference to modify subsequent slave carrier signals to substantially conform the slave carrier signal frequency and phase to the master carrier signal frequency and phase wherein the master carrier signal and the modified slave carrier signal are used to generate control signals for the converter and the inverter.

25. A method for use with a power conversion configuration including at least a first instance of one of a pulse width modulated (PWM) converter and a PWM inverter and at least a second instance of one of a PWM converter and a PWM inverter wherein a first PWM frequency signal the first instance and a second PWM frequency signal for the second instance are provided and wherein PWM signals for controlling the first and second instances are derived by comparing first and second modulating waveforms to first and second carrier signals, respectively, the method for substantially synchronizing carrier signals used at least in part to drive the first and second instances and comprising the steps of:

generating a first carrier signal using a first signal generator and as a function of the first PWM frequency signal;
generating a second carrier signal using a second signal generator and as a function of the second PWM frequency signal;

identifying at least one difference value indicating a difference between the first carrier signal and the second carrier signal;
using the at least one difference value to alter at least one of subsequent first carrier signals and subsequent second carrier signals thereby generating a modified carrier signal set including a subset of the first carrier signals, the second carrier signals and the altered carrier signals; and
comparing the modified carrier signal set to the modulating waveforms to generate PWM signals to drive the first and second instances, respectively.

26. The method of claim 25 wherein each of the first and second instances are PWM converters.

27. The method of claim 25 wherein each of the first and second instances are PWM inverters.

**Fig. 1**

**Fig. 2**

Start

Flag1 = 0 — 72

70

74 — Receive Master and Slave Carrier Command Frequencies (Max. Counts) $f^*_{mcc}$ and $f^*_{scc}$

Generate Slave Carrier $S_{scc}$ Count From Slave Command Frequency — 76

$\Delta_{cc} = 0$ — 78

Generate Master Carrier Count $S_{mcc}$ From Master Command Frequency — 80

82 — Flag1 = 1? — No

Yes

88 — Flag1 = 1

84 — Generate Slave Carrier Count $S_{scc}$ From Altered Slave Frequency

86 — Identify Master and Slave Square Waves

88 — Identify Rising Edge of Master Square Wave

90 — Start Counter to ID Difference Value $\Delta_{cc}$

98 — Identify Rising Edge of Slave Square Wave

Stop Counter to ID Final Value $\Delta_{cc}$ — 100

102 — Subtract Value $\Delta_{cc}$ From Slave Carrier Count To Generate Altered Slave Carrier Count

Use Modified Slave Carrier Count and Master Carrier Count to Control Inverter and Converter, Respectively

104 —

**Fig. 3**

**Fig. 4**

Fig. 5